# EUROPÄISCHE PATENTSCHRIFT

(11) **EP 0 561 798 B1**
(45) Veröffentlichungstag und Bekanntmachung des Hinweises auf die Patenterteilung: **26.10.1994**
(21) Anmeldenummer: 91919049.6
(22) Anmeldetag: 06.11.1991
(51) Int. Cl.: B23K 3/03, B23K 1/012

(54) **TEMPERATURREGELEINRICHTUNG FÜR LÖT- UND ENTLÖTGERÄTE**
TEMPERATURE REGULATOR FOR SOLDERING AND UNSOLDERING EQUIPMENT
REGULATEUR DE LA TEMPERATURE D'APPAREILS A SOUDER ET A DESSOUDER

(30) Priorität: 13.12.1990 DE 4039844
(43) Veröffentlichungstag der Anmeldung: 29.09.1993
(73) Patentinhaber: COOPER INDUSTRIES, INC., Houston Texas 77210 (US)
(72) Erfinder: FISCHER, Thomas, D-7120 Bietigheim-Bissingen (DE); MUNZ, Volker, D-7125 Kirchheim (DE)
(74) Vertreter: Grünecker, Kinkeldey, Stockmair & Schwanhäusser Anwaltssozietät
(86) Internationale Anmeldenummer: EP9102094
(87) Internationale Veröffentlichungsnummer: WO9210324

(56) Entgegenhaltungen:
- EP-A- 0 004 035
- EP-A- 0 048 772
- EP-A- 0 337 065

## Beschreibung

Die Erfindung bezieht sich auf ein Temperaturregeleinrichtung der im Oberbegriff des Patentanspruchs 1 genannten Art.

Aus der EP 0 048 772 ist eine Temperaturregeleinrichtung für ein Heißgas-Löt- und Entlötgerät bekannt, bei dem das Gas, z.B. Luft, von einer Gasquelle durch eine langgestreckte Heizwendel geleitet wird, die das Gas erhitzt, das dann über eine Düse dem zu erwärmenden Gegenstand, beispielsweise einer Lötstelle, mit einer dem gewünschten Anwendungsfall entsprechenden Temperatur zugeführt wird. Hierbei bildet das durch die Heizwendel strömende Gas eine Heizleistungs-Übertragungseinrichtung von der Heizwendel auf die Lötstelle. Bei diesem Heißgasgerät weist die Heizwendel einen positiven Temperaturkoeffizienten auf und sie wird aus einer steuerbaren Heizstromquelle gespeist, deren Strom periodisch unterbrochen wird. Während der Unterbrechung des Heizstromes wird ein Meßstrom aus einer Meßstromquelle durch die Heizwendel geleitet, wobei der Spannungsabfall längs der Heizwendel eine Funktion des Widerstandes und damit der Temperatur dieser Heizwendel ist. Dieser Spannungsabfall wird mit einem Sollwert verglichen und über eine Steuerschaltung zur Steuerung der steuerbaren Heizstromquelle verwendet. Diese Art der Temperaturregelung ist aufgrund der geringen Wärmekapazität der Heizwendel relativ trägheitslos und genau, und es ist in Betriebspausen möglich, den Gasstrom durch die Heizwendel zu unterbrechen, ohne daß auch der Heizstrom unterbrochen werden muß, da die Heizwendel durch die Temperaturregeleinrichtung immer auf der durch den Sollwert vorgegebenen Temperatur gehalten wird, ohne daß ein Durchbrennen der Heizwendel zu befürchten ist. Weiterhin befindet sich die Heizwendel bei erneuter Zuführung des Gasstromes auf ihrer Betriebstemperatur, so daß der Gasstrom sofort auf die gewünschte Temperatur erhitzt wird. Da das die Heizleistungs-Übertragungseinrichtung bildende Gas über eine Düse auf die Lötstelle geleitet wird, können sich jedoch Änderungen der Temperatur des Heißgases auf dem Weg durch die Düse ergeben, insbesondere bei bestimmten Querschnitten und Formen der Düse. Diese Temperaturänderungen können aufgrund der Messung der Temperatur längs der Heizwendel nicht erfaßt werden und können zu Änderungen der Austrittstemperatur des Heißgases aus der Düse führen.

Aus der EP-0 202 401 ist weiterhin ein Löt- oder Entlötgerät bekannt, bei dem die Heizleistungs-Übertragungseinrichtung durch eine Lötspitze gebildet ist und die Heizeinrichtung eine Heizwicklung mit vernachlässigbarem Temperaturkoeffizienten und einen mit dieser Heizwicklung in Reihe geschalteten Temperaturfühler in Form eines weiteren Heizwicklungsabschnittes mit einem meßbaren Temperaturkoeffizienten einschließt. Auch hierbei wird während einer periodischen Unterbrechung des Heizstromes der längs der Kombination aus der Heizwicklung und dem Temperaturfühler entstehende Spannungsabfall gemessen, mit einem Sollwert verglichen und über eine Steuerschaltung zur Steuerung einer steuerbaren Heizstromquelle verwendet, die die genannte Kombination speist. Wenn die die Heizleistungs-Übertragungseinrichtung bildende Lötspitze relativ lang ist oder einen relativ hohen Wärmewiderstand aufweist, so ermöglicht die im Bereich der Heizeinrichtung erfolgende Temperaturmessung keine eindeutige Aussage über die Temperatur an dem mit der Lötstelle in Eingriff kommenden aktiven Ende der Lötspitze, und zwar insbesondere dann nicht, wenn an diesem Ende eine sehr starke Wärmeableitung erfolgt.

Um die Genauigkeit der Temperaturregelung zu verbessern, ist es weiterhin bei Lötgeräten bekannt, einen von der Heizwicklung getrennten Temperaturfühler mit möglichst geringen Abmessungen innerhalb der Lötspitze soweit wie möglich zum aktiven Ende dieser Lötspitze hin anzuordnen. Da der Temperaturfühler in in diesem Fall nur über die Lötspitze mit der Heizwicklung in wärmeleitender Verbindung steht, besteht bei einem Wechsel der Lötspitze ohne vorherige Abschaltung des Lötgerätes die Gefahr einer Überhitzung und eines Durchbrennens der Heizwicklung, da der Temperaturfühler dann eine Temperatur anzeigt, die erheblich unter der tatsächlichen Temperatur der Heizwicklung liegt und zu einem Hochregeln des Heizstromes führt.

Weiterhin ergibt sich bei sehr starker Wärmeleistungsabgabe an der Lötspitze, beispielsweise beim Verlöten großflächiger Bauteile mit hoher Wärmekapazität, das Problem, daß während des Lötvorganges die Heizwicklung auf eine relativ hohe Temperatur gebracht wird, um die erforderliche Wärmeleistung an die Lötstelle zu liefern. Wenn die Lötspitze dann von der Lötstelle fort bewegt wird, so führt die hohe in der Heizwicklung noch gespeicherte Wärmeenergie zu einer Überhitzung der Lötspitze mit allen nachteiligen Folgen, wie Überhitzen des daran befindlichen Lotes oder Verzunderung der Lötspitze selbst.

Aus der EP0004035A1 ist weiterhin ein Lötwerkzeug mit zwei in der Nähe einer Spitze des Lötwerkzeug angeordneten Temperaturfühlern bekannt. Beide Temperaturfühler messen die Temperatur der Spitze, wobei ein Temperaturfühler zur Notabschaltung des Lötwerkzeugs beispielsweise bei Ausfall des anderen Temperaturfühlers dient.

Der Erfindung liegt die Aufgabe zugrunde, eine Temperaturregeleinrichtung der eingangs genannten Art zu schaffen, die eine verbesserte Regelung der Temperatur an dem zu erwärmenden Gegenstand, beispielsweise der Lötstelle ohne die Gefahr einer Beschädigung der Heizeinrichtung ermöglicht.

Diese Aufgabe wird durch die im kennzeichnenden Teil des Patentanspruchs 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung der Temperaturregeleinrichtung wird eine sehr genaue Regelung der Arbeitstemperatur, beispielsweise an der Lötstelle erzielt, und zwar unabhängig davon, ob die Heizleistungs-Übertragungseinrichtung durch eine Lötspitze oder durch einen Heißgasstrom gebildet ist, da der möglichst nahe an der Lötstelle angeordnete Temperaturfühler eine exakte Regelung der Temperatur ergibt, während die in Abhängigkeit von der Temperatur der Heizwicklung oder Heizwendel arbeitende Steuerschaltung bestrebt ist, diese Heizwendel oder Heizwicklung immer auf einer möglichst hohen Temperatur zu halten, insbesondere dann, wenn der Sollwert der die Temperatur der Heizwendel oder Heizwicklung auswertenden Steuerschaltung höher eingestellt ist, als der Sollwert der in Abhängigkeit von dem Temperaturfühler gesteuerten Steuerschaltung.

Die Messung der Temperatur der Heizwendel oder Heizwicklung kann dabei vorzugsweise in der eingangs beschriebenen Weise durch Messung des temperaturabhängigen Widerstandes dieser Heizwendel oder Heizwicklung erfolgen.

Es ist jedoch auch möglich, im Bereich der Heizwendel oder Heizwicklung einen getrennten Meßfühler üblicher Art anzuordnen.

Bei Anwendung auf den Fall einer Heizleistungs-Übertragungseinrichtung in Form einer Gasströmung wird bei Unterbrechung der Gaströmung der Temperaturfühler nicht mehr mit dem Heißgasstrom beaufschlagt, so daß er abkühlt und die weitere Steuerschaltung dauernd Steuersignale an die UND-Verknüpfung liefert. Die Steuersignale der einen, die Temperatur der Heizwendel auswertenden Steuerschaltung werden nur dann erzeugt, wenn die Heizwendel die durch den einen Sollwert vorgegebene Temperatur unterschreitet. Aufgrund der UND-Verknüpfung der Steuersignale beider Steuerschaltungen miteinander wird nur dann ein Einschalt-Ausgangssignal an die Heizstromquelle weitergeleitet, wenn sowohl die Temperatur der Heizwendel als auch die Temperatur des Temperaturfühlers unter die jeweiligen Sollwerte absinkt. Wenn die Gaszuführung wieder eingeleitet wird, so wird die Heizwendel abgekühlt, so daß die zugehörige eine Steuerschaltung dauernd Steuersignale liefert, während die weitere, dem Temperaturfühler zugeordnete Steuerschaltung in Abhängigkeit von der Austrittstemperatur des Heißgases im Bereich der Düse Steuersignale liefert, die wiederum der UND-Verknüpfung mit den Steuersignalen der einen Steuerschaltung unterworfen werden. Da der eine Sollwert vorzugsweise einer höheren Temperatur als der weitere Sollwert entspricht, wobei diese höhere Temperatur gleich der maximalen für die Heizwendel zulässigen Temperatur sein kann, wird die Heizwendel immer auf einer ausreichenden Temperatur gehalten und sie ist gleichzeitig gegen ein Durchbrennen geschützt.

Gleiches gilt für den Fall, in dem die Heizleistungs-Übertragungseinrichtung durch eine Lötspitze gebildet ist, da auch hier die die Temperatur der Heizwicklung auswertende Steuerschaltung bestrebt ist, diese Heizwicklung auf einer möglichst hohen Temperatur zu halten, während andererseits die dem Temperaturfühler zugeordnete Steuerschaltung die der Heizwicklung zugeführte Heizleistung soweit begrenzt, daß die Temperatur am Ende der Heizleistungs-Übertragungseinrichtung, das heißt an dem mit der Lötstelle in Eingriff zu bringenden aktiven Ende der Lötspitze auf einem konstanten Wert gehalten wird. Wenn dem aktiven Ende der Lötspitze eine große Wärmemenge entnommen wird, beispielsweise durch eine Lötstelle mit hoher Wärmekapazität, so wird das Steuersignal der weiteren dem Temperaturfühler zugeordneten Steuereinrichtung dauernd erzeugt und der Heizwendel wird eine sehr hohe Heizleistung zugeführt, die selbst bei hohem thermischen Widerstand der Heizspitze, beispielsweise aufgrund deren Form oder Material, zu einem erhöhten Wärmefluß und damit zur Aufrechterhaltung der gewünschten Temperatur des aktiven Endes der Lötspitze führt.

Um das Problem der Überhitzung der Lötspitze nach dem Verlöten von Bauteilen hoher Wärmekapazität zu beseitigen, ist weiterhin gemäß einer bevorzugten Ausgestaltung der Erfindung eine Einkopplung zumindestens eines Teils des Ausgangssignals des der Heizwendel zugeordneten Temperaturfühlers in den Vergleicher vorgesehen, der das Ausgangssignal des der Lötspitze zugeordneten Meßfühlers mit dem Sollwert vergleicht. Bei einer sehr starken Wärmeabnahme an der Lötspitze, die aufgrund der Regelung und des thermischen Widerstandes zwischen Heizwendel und Lötspitze zu einer relativ großen Temperaturdifferenz zwischen Heizwendel und Lötspitze führt, bewirkt diese Einkopplung, daß die Lötspitzentemperatur geringfügig unter die Solltemperatur absinkt. Bei der nachfolgenden Entlastung der Lötspitze durch Entfernen von der Lötstelle wird hierdurch aber ein sehr starkes Überschießen der Temperatur der Lötspitze über die Solltemperatur aufgrund der in der Heizwendel gespeicherten Wärmeenergie vermieden.

Diese Einkopplung des Ausgangssignals des der Heizwendel zugeordneten Temperaturfühlers in den Vergleicher für das Ausgangssignal des der Lötspitze zugeordneten Temperaturfühlers kann auf eine Größenordnung von 10% des Einflusses des der Lötspitze zugeordneten Temperaturfühlers eingestellt werden.

Vorzugsweise wird diese Einkopplung weiterhin so durchgeführt, daß sich im Leerlaufzustand keinerlei Einkopplung ergibt und diese Einkopplung mit zunehmender Wärmeabnahme an der Lötspitze bis zu einem vorgegebenen Maximalwert zunimmt.

Ausführungsbeispiele der Erfindung werden im folgenden anhand den Zeichnungen noch näher erläutert.

In der Zeichnung zeigen:
- Fig. 1: ein schematisches Blockschaltbild einer Ausführungsform der Temperaturregeleinrichtung,
- Fig. 2: eine abgeänderte Ausführungsform der Vergleicherschaltung 41 nach Fig. 1.

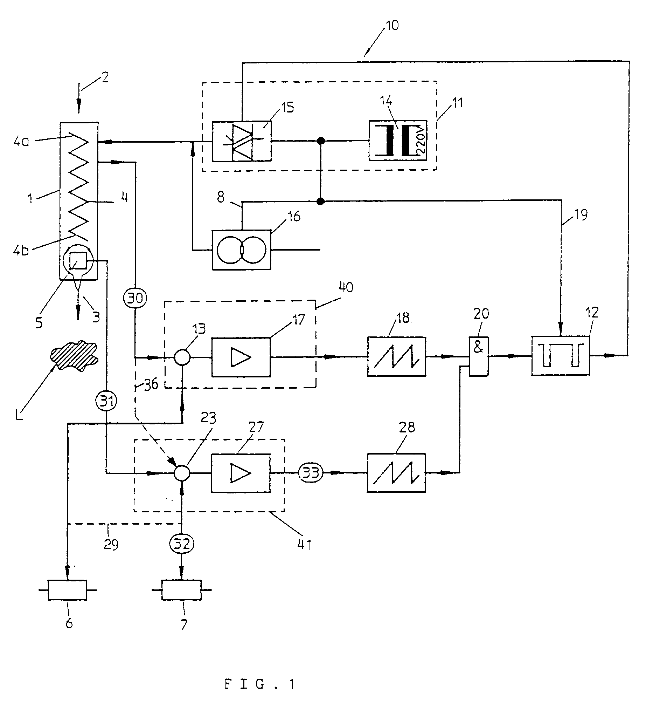

In Fig. 1 ist schematisch eine Ausführungsform der Temperaturregeleinrichtung für ein Löt- oder Entlötgerät dargestellt, das in dem hier beschriebenen Beispiel die Form eines Heißgas-Löt- oder Entlötgerätes aufweist. Dieses HeißgasLöt- oder Entlötgerät weist eine vereinfacht dargestellte Heizeinrichtung 1 auf, die eine Heizwendel 4 einschließt, deren Eingangsende 4a ein Gas, beispielsweise Luft in Richtung des Pfeils 2 zugeführt wird. Dieses Gas bildet eine Heizleistungs-Übertragungseinrichtung 3 von der Heizwendel auf eine bei L dargestellte Lötstelle, da es beim Hindurchurchströmen durch die Heizwendel 4 von deren Eintrittsende 4a zum Austrittsende 4b erwärmt wird und seine Wärme an die Lötstelle L abgibt. Ein entlang der Heizleistungs-Übertragungsstrecke möglichst nahe an der Lötstelle L angeordneter Temperaturfühler 5 wird mit diesem Heißgas beaufschlagt.

In gleiche Weise könnte diese Heizeinrichtung 1 auch durch eine Heizwicklung und eine damit in wärmeleitender Beziehung stehende Löt- oder Entlötspitze gebildet sein, die die Heizleistungs-Übertragungseinrichtung bildet.

Die Heizwendel 4 wird aus einer Heizstromquelle 11 gespeist, die beispielsweise einen in seiner Leitfähigkeit steuerbaren Halbleiter 15 und eine Spannungsquelle in Form eines Netztransformators 14 einschließen kann, wobei der in seiner Leitfähigkeit steuerbare Halbleiter 15 über eine Leitung 10 von einer Synchronisationsschaltung 12 gesteuert wird, die noch näher erläutert wird. Während periodischer Unterbrechungen des Heizstromes durch die Heizwendel 4 wird dieser ein Meßstrom aus einer Meßstromquelle 16 zugeführt, und der Spannungsabfall längs der Heizwendel wird in einem Vergleicher 13 einer Vergleicherschaltung 40 mit einem Sollwert mit einem Sollwertgeber 6 verglichen. Da die Heizwendel einen beispielsweise positiven Widerstands-Temperaturkoeffizienten ausreichender Größe aufweist, stellt der Spannungsabfall längs der Heizwendel 4 ein Maß ihrer Temperatur dar.

Wenn dies erwünscht ist, kann die Messung der Temperatur der Heizwendel auch mit einem getrennten Meßfühler erfolgen, dessen Ausgangssignal dem Vergleicher 13 zugeführt wird.

Die Vergleicherschaltung 40 kann gegebenenfalls noch einen Verstärker 17 einschließen, der das Ausgangssignal des Vergleichers 13 nach Verstärkung einem Pulsbreitenmodulator 18 zugeführt, der Steuersignale mit einer Dauer liefert, die von dem Ausgangssignal des Vergleichers 13 abhängt.

Das Ausgangssignal des Temperaturfühlers 5 wird in einer zweiten Vergleicherschaltung 41 mit einem zweiten Vergleicher 23 mit einem zweiten Sollwert von einem Sollwertgeber 7 verglichen und ebenfalls ggf. nach Verstärkung in einem Verstärker 27 einem zweiten Pulsbreitenmodulator 28 zugeführt, der Steuersignale mit einer Dauer liefert, die von dem Ausgangssignal des zweiten Vergleichers 23 abhängt.

Die Ausgangssignale des ersten und zweiten Pulsbreitenmodulators 18, 28 werden dem ersten bzw. zweiten Eingang eines UND-Verknüpfungsgliedes 20 zugeführt, das Einschalt-Ausgangssignale an die bereits erwähnte Synchronisationsschaltung 12 erleitet, die Einschaltimpulse für den steuerbaren Halbleiter 15 liefert. Diese Synchronisationsschaltung 12 wird über eine Leitung 19 mit einem Synchronisationssignal gespeist, das weiterhin über eine Leitung 8 der Meßstromquelle 16 zugeführt wird, um wechselweise den steuerbaren Halbleiter 15 der Heizstromquelle 11 oder die Meßstromquelle 16 einzuschalten.

Wenn der Heizwendel 4 kein Gas zugeführt wird, so wird der Temperaturfühler 5 nicht erwärmt und die zugehörige Steuerschaltung aus dem Vergleicher 23, dem Verstärker 27 und dem Pulsbreitenmodulator 28 liefert dauernd Steuersignale an das Verknüpfungsglied 20. Damit bestimmt der Spannungsabfall längs der Heizwendel 4 und damit deren Temperatur die Lieferung von Einschaltsignalen an die Synchronisationsschaltung 12, so daß die Heizwendel 4 immer auf Betriebstemperatur gehalten wird und gleichzeitig gegen ein Durchbrennen geschützt ist.

Der Sollwert des Sollwertgebers 6 für die der Heizwendel 4 zugeordnete Steuerschaltung 13, 17, 18 ist vorzugsweise auf eine höhere Temperatur eingestellt, als die dem Temperaturfühler 5 zugeordnete Steuerschaltung, und er kann auf die maximal zulässige Temperatur der Heizwendel 4 eingestellt sein.

Die Sollwertgeber 6 und 7 können gegebenenfalls mechanisch miteinander gekoppelt und einander nachgeführt sein, wie dies durch die gestrichelte Linie 29 in Fig. 1 angedeutet ist.

Wird die Heizwendel 4 dann von Gas durchströmt, so wird der Temperaturfühler 5 erwärmt und beim Erreichen der Solltemperatur wird die Lieferung von Steuersignalen von der zweiten Steuerschaltung 23, 27, 28 unterbrochen, so daß auch der Heizstrom unterbrochen wird und die Heizwendel 4 abkühlt, bis die Solltemperatur am Temperaturfühler 5 wieder erreicht und unterschritten wird.

Während der Zuführung des Gases liefert daher die der Heizwendel 4 zugeordnete Steuerschaltung 13, 17, 18 dauernd Steuersignale, und die Temperatur des Heißgases wird lediglich von der dem Temperaturfühler 5 zugeordneten Steuerschaltung 23, 27, 28 beeinflußt.

In analoger Weise würde auch bei Verwendung einer Lötspitze als Heizleistungs-Übertragungseinrichtung die eine, der Heizwicklung zugeordnete Steuerschaltung 13, 17, 18 bestrebt sein, die Temperatur der Heizwicklung auf einem möglichst hohen Wert zu halten, damit bei Bedarf genügend Wärme an die Lötspitze nachgeliefert werden kann, und die weitere Steuerschaltung, die dem Temperaturfühler zugeordnet ist, der möglichst nahe an dem aktiven Ende der Lötspitze angeordnet ist, würde die genaue Regelung der Temperatur dieses aktiven Endes übernehmen.

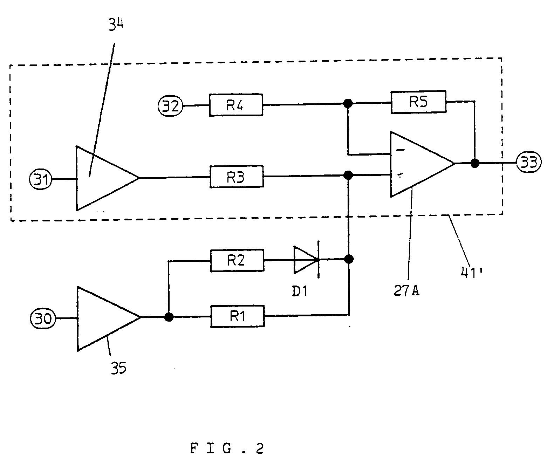

In Fig. 2 ist eine abgeänderte Ausführungsform der Vergleicherschaltung 41 dargestellt, wobei die Anschlußpunkte dieser Vergleicherschaltung in der Schaltung nach Fig. 1 durch in Kreise gesetzte Bezugsziffern 30, 31, 32, 33 angedeutet sind. Wie dies bereits in Fig. 1 durch die gestrichelte Linie 36 angedeutet ist, erfolgt bei der Vergleicherschaltung 41' nach Fig. 2 eine Einkopplung eines Teils des Ausgangssignals des der Heizwendel 4 zugeordneten Temperaturfühlers (die Heizwendel selbst kann dieser Temperaturfühler sein) in den Vergleicher 23 der zweiten Vergleicherschaltung.

Wie dies aus Fig. 2 zu erkennen ist, weist die Vergleicherschaltung 41' einen Verstärker 34 für das an (31) anliegende Ausgangssignal des Temperaturfühlers 5 auf, und das Ausgangssignal des Verstärkers 34 wird über einen Widerstand R3 dem nicht-invertierenden Eingang eines Operationsverstärkers 27A zugeführt, der gleichzeitig den Verstärker 27 der Vergleicherschaltung 41 nach Fig. 1 bildet. Dieser Operationsverstärker 27A ist in üblicher Weise mit einem Gegenkopplungswiderstand R5 vom Ausgang zum invertierenden Eingang beschaltet, und diesem invertierenden Eingang wird über einen Widerstand R4 das Signal von dem Sollwertgeber 7 an der Anschlußstelle (32) zugeführt.

Das Ausgangssignal des Operationsverstärkers 27A wird über den mit (33) bezeichneten Anschlußpunkt dem Eingang des Pulsbreitenmodulators 28 zugeführt, der mit negativer Logik arbeitet, d.h. bei einem negativen Ausgangssignal der Vergleicherschaltung 41 bzw. 41' eingeschaltet wird, um Einschaltsignale für die Stromversorgung der Heizwendel 4 zu liefern.

Vom Anschlußpunkt (30) wird das der Heizwendel 4 zugeordnete Temperatursignal über einen Verstärker 35 und einen Widerstand R1 dem nicht-invertierenden Eingang des Operationsverstärkers 27A zugeführt, wobei dieser Widerstand R1 durch einen Parallelschaltung aus einem weiteren Widerstand R2 und einer Diode D1 überbrückt ist. Die Größe der Einkopplung des Temperatursignals der Heizwendel 4 bezogen auf das Temperaturausgangssignal des Meßfühlers 5 ist durch das Verhältnis der Widerstände R1 bzw. R2/D1 zu dem Widerstand R3 bestimmt und wird beispielsweise auf etwa 10% des Einflusses des Temperaturfühlers 5 festgelegt.

Die Verstärkung der an den Anschlußpunkten (31) und (30) anliegenden Temperaturfühlersignale in den Verstärkern 34 und 35 ist so gewählt, daß im Leerlaufzustand die beiden voneinander verschiedenen Temperaturen das gleiche Ausgangssignal ergeben, wodurch keine Regelbeeinflussung vorhanden ist. Bei starker Belastung, das heißt Wärmeabnahme an der Lötspitze, steigt die Temperatur der Heizwendel 4 stark an und beeinflußt das dem nicht-invertierenden Eingang des Operationsverstärkers 27A zugeführte Signal zunächst nur über R1 und bei größer werdender Abweichung über die Parallelschaltung von R1 einerseits und der Reihenschaltung aus R2 und D1 andererseits. Das Temperatursignal der Heizwendel 4 wird dann zum Ausgangssignal des der Lötspitze zugeordneten Temperaturfühlers 5 addiert. Hierdurch ergibt sich zwar im Ergebnis eine Verringerung der Solltemperatur der Lötspitze, andererseits wird jedoch bei Entlastung der Lötspitze ein zu hoher Temperaturanstieg an der Lötspitze aufgrund der zu diesem Zeitpunkt in der Heizwendel gespeicherten Wärmeenergie verhindert.

Da die Temperatur der Heizwendel der Temperatur der Lötspitze voreilt, ergibt diese Anordnung quasi einen PD-Regler.

## Patentansprüche

1. Temperaturregeleinrichtung für Löt- und Entlötgeräte, mit einer aus einer steuerbaren elektrischen Heizstromquelle (11) gespeisten Heizeinrichtung (1), deren Heizleistung über eine Heizleistungs-Übertragungseinrichtung auf eine Lötstelle übertragen wird, wobei Temperaturfühler (4,5) zur Messung der Temperatur an mit Abstand voneinander angeordneten Stellen entlang der Heizleistungs-Übertragungsstrecke vorgesehen sind und zu den gemessenen Temperaturen proportionale Signale erzeugen, und in jeweiligen Vergleichern (13,23) von Steuerschaltungen (13,17,18 / 23,27,28) mit jeweiligen Sollwerten (6,7) verglichen werden, wobei die Steuerschaltungen aus den Ausgangssignalen der Vergleicher Steuersignale zur Steuerung der Heizstromquelle (11) ableiten, und wobei einer (5) der Temperaturfühler an dem der Lötstelle benachbarten Bereich der Heizleistungs-Übertragungseinrichtung (3) angeordnet ist,
dadurch **gekennzeichnet,** daß ein anderer (4) der Temperaturmeßfühler (4,5) der Heizeinrichtung (1) zugeordnet ist und dann die Steuersignale der Steuerschaltungen (13,17,18 / 23,27,28) jeweiligen Eingängen eines UND- Verknüpfungsgliedes (20) zugeführt werden, dessen Ausgangssignal die steuerbare Heizstromquelle (11) nur dann einschaltet, wenn gleichzeitig alle Steuerschaltungen Ausgangssignale für unter den jeweiligen Sollwerten liegende Temperaturen liefern.

2. Temperaturregeleinrichtung nach Anspruch 1,
dadurch **gekennzeichnet,** daß die die Heizeinrichtung (1) einen von ihrer Temperatur abhängigen elektrischen Widerstand aufweist, daß die eine Steuerschaltung (13,17,18) weiterhin eine Meßstromquelle (16) aufweist, die bei Unterbrechung des Heizstromes aus der Heizstromquelle (11) einen Meßstrom durch die Heizeinrichtung (1) leitet, um ein dem elektrischen Widerstand und damit der Temperatur der Heizeinrichtung (1) proportionales Signal zu erzeugen, das in dem Vergleicher (13) mit dem einen Sollwert (6) verglichen wird.

3. Temperaturregeleinrichtung nach Anspruch 1 oder 2,
dadurch **gekennzeichnet,** daß die erste Steuerschaltung den einen Vergleicher (13) zum Vergleich des zur Temperatur der Heizeinrichtung (1) proportionalen Signals mit dem einen Sollwert (6), einen Verstärker (17) für das Ausgangssignal des einen Vergleichers (13) und einen Pulsdauermodulator (18) zur Erzeugung von Einschaltimpulsen mit einer von dem Ausgangssignal des Vergleichers (13) abhängigen Impulsdauer umfaßt.

4. Temperaturregeleinrichtung nach einem der Anspruch 1-3,
dadurch **gekennzeichnet,** daß die weitere Steuerschaltung den das Ausgangssignal des Temperaturfühlers (5) mit dem zweiten Sollwert (7) vergleichenden weiteren Vergleicher (23), einen Verstärker (27) für das Ausgangssignal des weiteren Vergleichers (23) und einen Pulsdauermodulator (28) zur Erzeugung von Einschaltimpulsen mit einer von dem Ausgangssignal des weiteren Vergleichers (23) abhängigen Impulsdauer umfaßt.

5. Temperaturregeleinrichtung nach einem der Ansprüche 1-4,
dadurch **gekennzeichnet,** daß das Ausgangssignal des UND-Verknüpfungsgliedes (20) einer Nullspannungs-Synchronisationsschaltung (12) zugeführt wird, dessen Ausgangssignal zur Steuerung eines in seiner Leitfähigkeit steuerbaren Halbleiterelementes (15) der Heizstromquelle (11) zugeführt werden, über das ein Heizstrom der Heizeinrichtung (1) zugeführt wird.

6. Temperaturregeleinrichtung nach einem der vorhergehenden Ansprüche, dadurch **gekennzeichnet,** daß der eine Sollwert (6) einer Temperatur entspricht, die gleich der maximal zulässigen Temperatur der Heizeinrichtung (4) ist.

7. Temperaturregeleinrichtung nach einem der Ansprüche 1-5,
dadurch **gekennzeichnet,** daß der eine Sollwert (6) einer Temperatur entspricht, die über der Temperatur liegt, die durch den weiteren Sollwert (7) festgelegt ist.

8. Temperaturregeleinrichtung nach einem der vorhergehenden Ansprüche, dadurch **gekennzeichnet,** daß die Sollwerte (6,7) der einen und der weiteren Steuerschaltung (13,17,18/23,27,28) einander nachgeführt werden.

9. Temperaturregeleinrichtung nach einem der vorhergehenden Ansprüche, dadurch **gekennzeichnet,** daß ein Teil des zur Temperatur der Heizeinrichtung (1) proportionalen Signals in den Vergleicher (23) für das Ausgangssignal des Temperaturfühlers (5) derart eingekoppelt wird, daß sich eine Verringerung der Solltemperatur der weiteren steuerschaltng (23,27,28) ergibt.

10. Temperaturregeleinrichtung nach Anspruch 9,
dadurch **gekennzeichnet,** daß die Einkopplung des Teils des zur Temperatur der Heizeinrichtung (1) proportionalen Signals derart ist, daß sich im Leerlaufzustand keine Beeinflussung des Vergleichers (23) für das Ausgangssignal des Temperaturfühlers (5) ergibt, und daß im Lastzustand die Einkopplung etwa 10% des Ausgangssignals des Temperaturfühlers (5) darstellt.

11. Temperaturregeleinrichtung nach einem der vorhergehenden Ansprüche, dadurch **gekennzeichnet,** daß das Löt- oder Entlötgerät ein Heißgas-Gerät ist, daß die Heizeinrichtung (1) eine langgestreckte Heizwendel mit einem Gaseintrittsende (4a) und einem Heißgas-Austrittsende (4b) einschließt, wobei die Heizleistungs-Übertragungseinrichtung (3) durch das die Heizwendel (4) durchströmende Gas gebildet ist, das vom Heißgas-Austrittsende (4b) über eine Düse auf die Lötstelle geleitet wird, und daß der Temperaturfühler (5) im Bereich der Düse angeordnet ist.

12. Temperaturregeleinrichtung nach einem der Ansprüche 1-8,
dadurch **gekennzeichnet,** daß die Heizleistungs-Übertragungseinrichtung durch eine wärmeleitende Lötspitze gebildet ist, die mit einem Ende mit der Heizeinrichtung in wärmeleitendem Kontakt steht, während ihr anderes Ende mit der Lötstelle in Eingriff bringbar ist, und daß der Temperaturfühler im Bereich der Lötspitze an dem der Lötstelle zugewandten Ende angeordnet ist.

## Claims

1. Temperature control device for soldering and unsoldering appliances, having a heating device (1) which is supplied from a controllable electric heating power source (11) and whose heat output is transferred by a heat output transfer device to a soldered joint, wherein temperature sensors (4, 5) for measuring the temperature are provided at points disposed a distance apart from one another along the heat output transfer section and generate signals which are proportional to the measured temperatures and are compared in respective comparators (13, 23) of control circuits (13, 17, 18 / 23, 27, 28) with respective setpoint values (6, 7), the control circuits deriving from the output signals of the comparators control signals for controlling the heating power source (11), and wherein one (5) of the temperature sensors is disposed at the region of the heat output transfer device (3) adjacent to the soldered joint, characterized in that another (4) of the temperature sensors (4, 5) is associated with the heating device (1), and that the control signals of the control circuits (13, 17, 18 / 23, 27, 28) are supplied to respective inputs of an AND-operation element (20), whose output signal switches on the controllable heating power source (11) only when all of the control circuits simultaneously supply output signals for temperatures lying below the respective setpoint values.

2. Temperature control device according to claim 1, characterized in that the heating device (1) has an electrical resistance which is dependent upon its temperature, that the one control circuit (13, 17, 18) further has a measuring current source (16) which, upon interruption of the heating current from the heating power source (11), conducts a measuring current through the heating device (1) in order to generate a signal which is proportional to the electrical resistance and hence to the temperature of the heating device (1) and which is compared in the comparator (13) with the one setpoint value (6).

3. Temperature control device according to claim 1 or 2, characterized in that the first control circuit comprises the one comparator (13) for comparing the signal proportional to the temperature of the heating device (1) with the one setpoint value (6), an amplifier (17) for the output signal of the one comparator (13), and a pulse-duration modulator (18) for generating switch-on pulses with a pulse duration dependent on the output signal of the comparator (13).

4. Temperature control device according to one of claims 1 to 3, characterized in that the further control circuit comprises the further comparator (23) which compares the output signal of the temperature sensor (5) with the second setpoint value (7), an amplifier (27) for the output signal of the further comparator (23), and a pulse-duration modulator (28) for generating switch-on pulses with a pulse duration dependent on the output signal of the further comparator (23).

5. Temperature control device according to one of claims 1 to 4, characterized in that the output signal of the AND-operation element (20) is supplied to a zero-voltage synchronization circuit (12), whose output signal is supplied to the heating power source (11) for controlling an, in terms of its conductivity, controllable semiconductor element (15) via which a heating current of the heating device (1) is supplied.

6. Temperature control device according to one of the preceding claims, characterized in that the one setpoint value (6) corresponds to a temperature which is equal to the maximum permissible temperature of the heating device (4).

7. Temperature control device according to one of claims 1 to 5, characterized in that the one setpoint value (6) corresponds to a temperature which lies above the temperature fixed by the further setpoint value (7).

8. Temperature control device according to one of the preceding claims, characterized in that the setpoint values (6, 7) of the one and the further control circuits (13, 17, 18 / 23, 27, 28) are matched to one another.

9. Temperature control device according to one of the preceding claims, characterized in that a part of the signal proportional to the temperature of the heating device (1) is injected into the comparator (23) for the output signal of the temperature sensor (5) in such a way that a reduction in the setpoint temperature of the further control circuit (23, 27, 28) arises.

10. Temperature control device according to claim 9, characterized in that the injection of part of the signal proportional to the temperature of the heating device (1) is such that in the no-load condition no influencing of the comparator (23) for the output signal of the temperature sensor (5) arises, and that in the load condition the injection represents around 10% of the output signal of the temperature sensor (5).

11. Temperature control device according to one of the preceding claims, characterized in that the soldering or unsoldering appliance is a hot-gas appliance, that the heating device (1) includes an elongated heating coil with a gas inlet end (4a) and a hot-gas outlet end (4b), the heat output transfer device (3) being formed by the gas, which flows through the heating coil (4) and is directed from the hot-gas outlet end (4b) through a nozzle onto the soldered joint, and that the temperature sensor (5) is disposed in the region of the nozzle.

12. Temperature control device according to one of claims 1 to 8, characterized in that the heat output transfer device is formed by a heat-conducting soldering tip, one end of which is in heat-conducting contact with the heating device while its other end may be brought into engagement with the soldered joint, and that the temperature sensor is disposed in the region of the soldering tip at the end facing towards the soldered joint.

## Revendications

1. Dispositif de régulation de température pour appareil à souder et à dessouder, comprenant un dispositif de chauffage (1) alimenté par une source (11) de courant électrique de chauffage commandée, dont la puissance de chauffage est transmise à une zone de soudage par l'intermédiaire d'un dispositif de transmission de la puissance de chauffage, dans lequel des capteurs de température (4, 5) sont prévus en des points disposés à un certain écartement mutuel sur la longueur du trajet de transmission de la puissance de chauffage et produisent des signaux proportionnels aux températures mesurées, lesquels signaux sont comparés à des valeurs de consigne (6, 7) respectives dans des comparateurs respectifs (13, 23) appartenant à des circuits de commande (13, 17, 18/23, 27, 28), les circuits de commande formant, à partir des signaux de sortie des comparateurs, des signaux de commande pour la commande de la source de courant de chauffage (11), et dans lequel un (5) des capteurs de température est disposé dans la région du dispositif (3) de transmission de la puissance de chauffage qui est adjacente à la zone de soudage, caractérisé en ce qu'un autre (4) des capteurs de température (4, 5) est associé au dispositif de chauffage (1) et en ce que les signaux de commande des circuits de commande (13, 17, 18/23, 27, 28) sont transmis à des entrées respectives d'un circuit logique ET (20) dont le signal de sortie ne met la source de courant de chauffage commandée en circuit (11) que lorsque tous les circuits de commande émettent simultanément des signaux de sortie correspondant à des températures inférieures aux valeurs de consigne respectives.

2. Dispositif de régulation de température selon la revendication 1, caractérisé en ce que le dispositif de chauffage (1) comprend une résistance électrique qui varie avec la température de ce dispositif, en ce que l'un des circuits de commande (13, 17, 18) comprend en outre une source (16) de courant de mesure qui, en réponse à une interruption du courant de chauffage issu de la source (11) de courant de chauffage, fait passer un courant de mesure à travers le dispositif de chauffage (1) pour produire un signal proportionnel à la résistance électrique et, par conséquent, à la température du dispositif de chauffage (1), signal qui est comparé à l'une des valeurs de consigne (6) dans le comparateur (13).

3. Dispositif de régulation de température selon la revendication 1 ou 2, caractérisé en ce que le premier circuit de commande comprend le premier comparateur (13), qui sert à comparer le signal proportionnel à la température du dispositif de chauffage (1) à une valeur de consigne (6), un amplificateur (17) pour le signal de sortie de ce comparateur (13) et un modulateur de durée d'impulsions (18) servant à produire des impulsions de mise en circuit d'une durée qui est fonction du signal de sortie du comparateur (13).

4. Dispositif de régulation de température selon une des revendications 1 à 3, caractérisé en ce que l'autre circuit de commande comprend l'autre comparateur (23), qui compare le signal de sortie du capteur de température (5) à la deuxième valeur de consigne (7), un amplificateur (27) pour le signal de sortie de cet autre comparateur (23), et un modulateur de durée d'impulsions (28) servant à produire des impulsions de mise en circuit d'une durée qui est fonction du signal de sortie de l'autre comparateur (23).

5. Dispositif de régulation de température selon une des revendications 1 à 4, caractérisé en ce que le signal de sortie du circuit logique ET (20) est transmis à un circuit (12) de sychronisation de tension nulle, dont le signal de sortie est transmis à la source (11) de courant de chauffage pour assurer la commande d'un élément semiconducteur (15) commandé en conductibilité, et par l'intermédiaire duquel un courant de chauffage est transmis au dispositif de chauffage (1).

6. Dispositif de régulation de température selon une des revendications précédentes, caractérisé en ce que la première valeur de consigne (6) correspond à une température qui est égale à la température maximale admissible du dispositif de chauffage (4).

7. Dispositif de régulation de température selon une des revendications 1 à 5, caractérisé en ce que la première valeur de consigne (6) correspond à une température qui est supérieure à la température qui est fixée par l'autre valeur de consigne (7).

8. Dispositif de régulation de température selon une des revendications précédentes, caractérisé en ce que les valeurs de consigne (6, 7) sont transmises à l'un et à l'autre des circuits de commande (13, 17, 18/23, 27, 28).

9. Dispositif de régulation de température selon une des revendications précédentes, caractérisé en ce qu'une partie du signal proportionnel à la température du dispositif de chauffage (1) est introduite dans le comparateur (23) agissant sur le signal de sortie du capteur de température (5) de manière qu'il se produise une diminution de la température de consigne de l'autre circuit de commande (23, 27, 28).

10. Dispositif de régulation de température selon la revendication 9, caractérisé en ce que le couplage de la partie du signal proportionnel à la température du dispositif de chauffage (1) est tel qu'à l'état de circuit ouvert, le comparateur (23) agissant sur le signal de sortie du capteur de température (5) ne soit pas influencé et qu'à l'état de charge, ce couplage représente environ 10 % du signal de sortie du capteur de température (5).

11. Dispositif de régulation de température selon une quelconque des revendications précédentes, caractérisé à ce que l'appareil à souder ou dessouder est un appareil à gaz chaud, en ce que le dispositif de chauffage (1) comprend une spire de chauffage de forme allongée munie d'une extrémité (4a) d'entrée du gaz et d'une extrémité (4b) de sortie du gaz chaud, le dispositif (3) de transmission de la puissance de chauffage étant constitué par le gaz qui traverse la spire de chauffage (4), qui est envoyé à la zone de soudage, au sortir de l'extrémité (4b) de sortie du gaz chaud, en passant par une buse, et en ce que le capteur de température (5) est disposé dans la région de la buse.

12. Dispositif de régulation de température selon une des revendications 1 à 8, caractérisé en ce que le dispositif de transmission de la puissance de chauffage est formé d'une pointe de soudage conductrice de la chaleur dont une extrémité est en contact de conduction de la chaleur avec le dispositif de chauffage, tandis que son autre extrémité peut être accouplée à la zone de soudage, et en ce que le capteur de température est disposé dans la région de la pointe de soudage, à l'extrémité dirigée vers la zone de soudage.
